## Europäisches Patentamt
## European Patent Office
## Office européen des brevets

Veröffentlichungsnummer: **0 290 760**
**A2**

# EUROPÄISCHE PATENTANMELDUNG

Anmeldenummer: **88104716.1**

Int. Cl.⁴ **B23K 26/08**

Anmeldetag: **24.03.88**

Priorität: **11.05.87 CH 1794/87**

Veröffentlichungstag der Anmeldung:
**17.11.88 Patentblatt 88/46**

Benannte Vertragsstaaten:
**BE CH DE ES FR GB GR IT LI NL SE**

Anmelder: **ELPATRONIC AG**
**Baarerstrasse 117**
**CH-6300 Zug(CH)**

Erfinder: **Depaoli, Albano, Dr.**
**Berlinerring 11**
**D-7130 Mühlacker(DE)**
Erfinder: **Lanz, Andreas**
**Industriestrasse 32**
**CH-8962 Bergdietikon(CH)**
Erfinder: **Baumgartner, Michael**
**Hofackerstrasse 42**
**CH-8953 Dietikon(CH)**
Erfinder: **Bugmann, Franz**
**Schützenstrasse 17**
**CH-8963 Dietikon(CH)**

Vertreter: **Hotz, Klaus, Dipl.-El.-Ing. / ETH**
**c/o SOUDRONIC AG Industriestrasse 35**
**Postfach 11**
**CH-8962 Bergdietikon(CH)**

## Vorrichtung zum Führen von Zargen in einer Laserschweissmaschine.

Beschrieben ist eine Vorrichtung zum Führen von Zargen in einer Laserschweißmaschine. Die Vorrichtung weist einen wassergekühlten Niederhalteschuh (22) mit integrierter Niederhalterolle (24), Gaszufuhr (64) und Absaugung (68) auf, wobei die Niederhalterolle (24) vor dem theoretischen Schnittpunkt der beiden stumpfzuschweißenden Zargenränder angeordnet ist und mit dem Niederhalteschuh (22) in der Höhe auf die Blechdicke einstellbar ist. Dem Niederhalteschuh (22) ist ein Gegenhalteschuh (26) benachbart, und der Niederhalterolle (24) ist eine Gegenhalterolle (28) benachbart. Unterhalb des Gegenhalteschuhs (26) ist eine horizontal und vertikal einstellbare Stützrolle (30) vorgesehen, die die Zargen während des Schweißvorganges und des Durchlaufens der Schweißebene (10) an ihrer Unterseite abstützt. Die Zusammenführung der stumpfzuschweißenden Zargenränder, die aus der Z-Schiene austreten, erfolgt mittels dieser Vorrichtung ohne große Reibung und Verschleiß, die Schweißstelle ist geschützt, und beim Schweißen entstehender Rauch wird abgesaugt. Durch die Stützrolle wird eine zu enge Einstellung des Transportmittels vermieden, durch die erhöhter Kraftbedarf und Verschleiß im Führungsbereich der Z-Schiene verursacht werden würden.

Fig 3

## Vorrichtung zum Führen von Zargen in einer Laserschweißmaschine

Die Erfindung betrifft eine Vorrichtung zum Führen von Zargen in einer Laserschweißmaschine, mit einem Rundapparat zum Herstellen der Zargen durch Einrunden von ebenen Blechzuschnitten, mit einer Z-Schiene zum Führen der beiden stumpfzuschweißenden Zargenränder bis in die Nähe der Schweißebene und mit einem Transportmittel zum Vorschub und zur zusätzlichen Führung der Zargen wenigstens bis zur Schweißebene.

Eine solche Vorrichtung ist aus der EP 0 058 135 B1 bekannt. Bei dieser bekannten Vorrichtung besteht der Rundapparat aus Rollen, die bis in die Nähe der Schweißebene (d.h. die zum Zargenvorschubweg rechtwinkelige Mittelebene des Laserstrahls) über der Länge der Maschine vorgesehen sind und der Maschine zugeführte ebene Blechzuschnitte einrunden, d.h. in eine zylindrische Form bringen und dabei die Zargenränder in Führungsnuten der Z-Schiene einführen und darin halten. Zusätzlich ist ein Transportmittel (in der EP 0 058 135 B1 nicht dargestellt) vorgesehen, das aus Kettenförderern, hin-und hergehenden Kolben od.dgl. besteht. Dieses Transportmittel bewirkt zwar wenigstens bis zur Schweißebene eine zusätzliche Führung der Zargen, es hat sich jedoch gezeigt, daß bei der Zusammenführung der die Führungsnuten der Z-Schiene verlassenden Zargenränder große Reibung auftreten kann, die zum Verschleiß der Z-Schiene führt. Außerdem können die Zargenränder am Ende der Zarge nicht immer sicher verschweißt werden. Das Transportmittel kann nicht ohne weiteres enger eingestellt werden, weil das zu erhöhtem Kraftbedarf und zu noch stärkerem Verschleiß im Führungsbereich der Z-Schiene führen würde. Schließlich ist auch bereits erkannt worden, daß die Qualität der auf solchen Laserschweißmaschinen hergestellten Zargenschweißnähte durch Oxidationsvorgänge und Rauchbildung während des Schweißvorganges (insbesondere beim Schweißen von lackierten Teilen) beeinträchtigt wird.

Aufgabe der Erfindung ist es, eine Vorrichtung der eingangs genannten Art so auszubilden, daß sich Schweißnähte wesentlich besserer Qualität herstellen lassen.

Diese Aufgabe ist erfindungsgemäß durch das im kennzeichnenden Teil des Patentanspruchs 1 angegebene Merkmal gelöst.

Der erfindungsgemäß im Bereich der Schweißebene vorgesehene, die Schweißstelle oberhalb des Zargenvorschubweges umgebende Niederhalteschuh beseitigt einen großen Teil der oben dargelegten Probleme. Der Niederhalteschuh wird in der Schweißebene bezüglich seiner Höhe entsprechend der Blechdicke positioniert. In Zusammenwirkung mit dem entsprechend eng eingestellten Transportmittel ermöglicht er die Zusammenführung der aus der Z-Schiene austretenden Zargenränder ohne große Reibung und ohne großen Verschleiß. Da er die Schweißstelle zumindest teilweise nach oben hin abdeckt, treten auch geringere Oxidationsprobleme auf. Bei entsprechend ausgebildeten und auf den Niederhalteschuh abgestimmtem Transportmittel läßt sich auch das Ende der Zarge sicher verschweißen, ohne daß es zu erhöhtem Kraftbedarf und Verschleiß im Führungsbereich der Z-Schiene und am Niederhalteschuh kommt.

Vorteilhafte Ausgestaltungen der Erfindung bilden den Gegenstand der Unteransprüche.

Die Ausgestaltung der Erfindung nach den Ansprüchen 2 und 3 bietet den Vorteil, daß der Niederhalteschuh auf einfache Weise an verschiedene Blechdicken angepaßt und auf einfachere Weise auf ein gegebenes Transportmittel abgestimmt werden kann.

In der Ausgestaltung der Erfindung nach den Ansprüchen 4 bis 6 ist in den Niederhalteschuh eine Niederhalterolle integriert, die federnd ausgebildet und höhenverstellbar ist. Die Niederhalterolle ermöglicht eine feinfühligere Dosierung der am Niederhalteschuh auf die Zarge ausgeübten Reaktionskraft. Die Niederhalterolle ist vorzugsweise etwa 1 mm vor dem theoretischen Schnittpunkt der beiden zu verschweißenden Zargenränder angeordnet und mit dem Niederhalteschuh gemeinsam in der Höhe je nach Blechdicke einstellbar.

In der Ausgestaltung der Erfindung nach den Ansprüchen 7 und 8 sind zusätzlich ein Gegenhalteschuh und eine Gegenhalterolle vorgesehen, die ermöglichen, mit dem Niederhalteschuh bzw. der Niederhalterolle, die ihnen benachbart sind, einen Spalt einzustellen, der vorzugsweise eine Höhe hat, die gleich der Blechstärke plus 10% der Blechstärke ist. Dadurch wird eine noch bessere Zusammenführung der stumpfzuschweißenden Zargenränder gewährleistet. Vorzugsweise steht dabei der Gegenhalteschuh ein wenig tiefer (vorzugsweise maximal 0,03 mm) als die Gegenhalterolle , so daß die Hauptgegenhaltefunktion an der Innen seite der Zarge durch die Gegenhalterolle erfüllt wird, was geringe Reibung und geringen Verschleiß bedeutet. Zur weiteren Verschleißminderung können selbstverständlich sämtliche Führungsbereiche zusätzlich mit Hartmetallauflagen oder eingelöteten Hartmetalleinsätzen versehen werden.

In der Ausgestaltung der Erfindung nach Anspruch 9 ergibt sich eine besonders gute Führung der Zargen im Bereich der Schweißebene, da die horizontal und vertikal einstellbare Stützrolle unterhalb des Transportmittels die Zargen beim Durchlauf durch die Schweißebene stützt. Es hat sich gezeigt, daß mit dieser Stützrolle das Ende der Zarge besonders sicher verschweißt werden kann, ohne daß der Transportmittelvorschub zu eng eingestellt werden muß, was wie erwähnt zu erhöhtem Kraftbedarf und Verschleiß im Führungsbereich der Z-Schiene führen würde.

In der Ausgestaltung der Erfindung nach Anspruch 10 ergibt sich ein besonders sicherer Schutz der Schweißstelle vor Oxydation und dgl.

In der Ausgestaltung der Erfindung nach den Ansprüchen 11 und 12 wird die Schweißnahtqualität noch weiter verbessert, indem von der Schweißstelle beim Schweißen (insbesondere von lackierten Teilen) entstehender Rauch und dgl. abgesaugt wird.

In der Ausgestaltung der Erfindung nach Anspruch 13 ist der Niederhalteschuh an eine Kühleinrichtung angeschlossen, vorzugsweise an einen in der Laserschweißmaschine ohnehin vorhandenen Kühlwasserkreislauf, so daß sich der Niederhalteschuh ohne zusätzliche äußere Kühlmaßnahmen auf akzeptabler Temperatur halten läßt.

Ausführungsbeispiele der Erfindung werden im folgenden unter Bezugnahme auf die Zeichnungen näher beschrieben. Es zeigt

Fig. 1 in perspektivischer Darstellung den Bereich der Schweißebene einer Laserschweißmaschine mit raupenförmigen Transportketten als Transportmittel für Zargen, deren Zargenränder in der Schweißebene stumpfzuschweissen sind,

Fig. 2 eine ähnliche Darstellung wie in Fig. 1, wobei aber das Transportmittel weggelassen worden ist, um weitere Teile der Vorrichtung zum Führen von Zargen sichtbar zu machen, und

Fig. 3 in einer Längsschnittansicht die Vorrichtung nach der Erfindung, wobei das Transportmittel wiederum weggelassen worden ist.

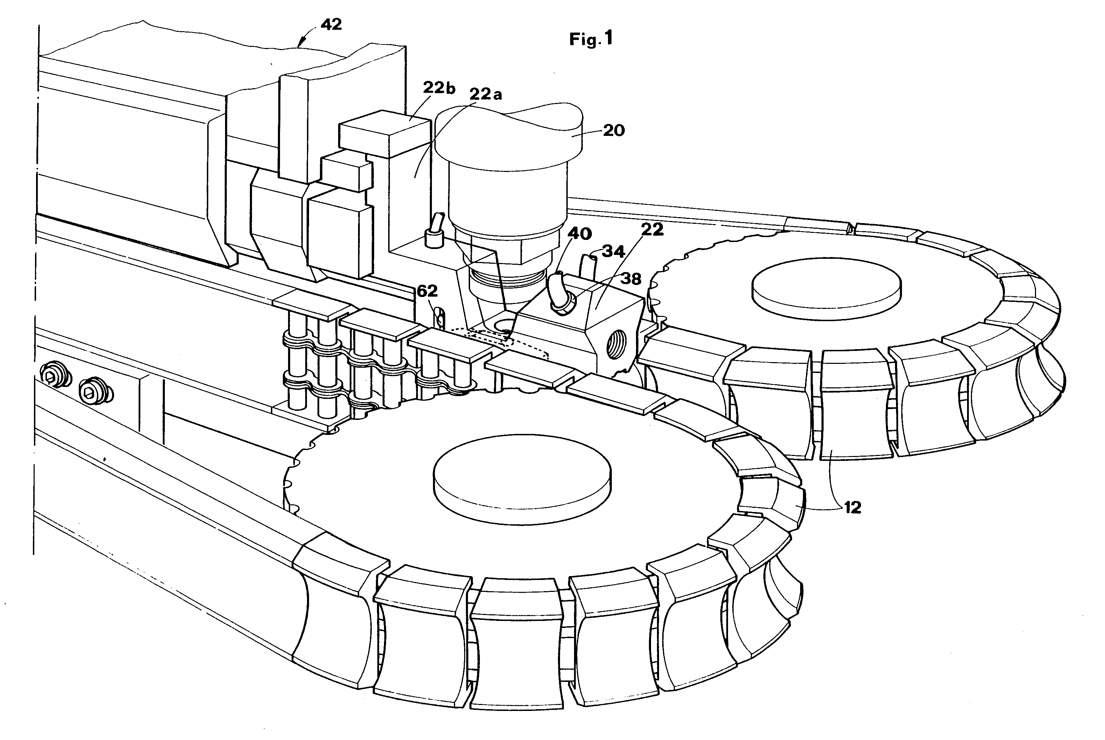

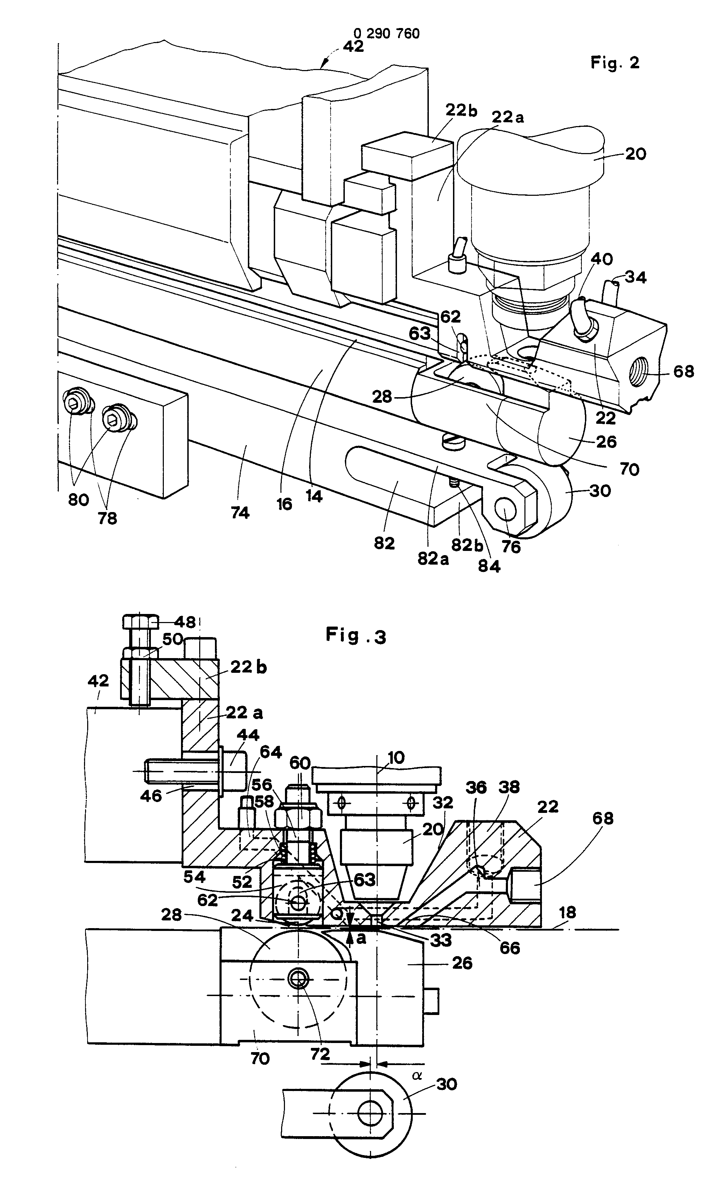

Die Fig. 1 bis 3 zeigen eine Laserschweißmaschine, von welcher nur der zu deren Schweißebene 10 benachbarte Teil dargestellt ist. Die Laserschweißmaschine dient zum Stumpfschweißen der Ränder von Zargen (nicht dargestellt), welche in einem Rundapparat (ebenfalls nicht dargestellt) durch Einrunden von ebenen Blechzuschnitten hergestellt worden sind und der Schweißebene mittels eines Transportmittels 12 in Form von Transportketten zugeführt werden. Bei dem Vorschub durch das Transportmittel 12 werden die eingerundeten Zargen in zwei benachbarten Führungsnuten 14 (eine davon ist in Fig. 2 sichtbar) einer Z-Schiene 16 geführt, die in einigen Zentimetern Abstand vor der Schweißebene 10 endet, aber so ausgebildet ist, daß die aus ihr austretenden, stumpfzuschweissenden Zargenränder an der Stelle, wo sich der Zargenvorschubweg 18 (in Fig. 3 als strichpunktierte Pfeillinie dargestellt) und die Schweißebene 10 schneiden, zusammengeführt werden. Im Stand der Technik erfolgt die Führung der Zargen zwischen dem Ende der Z-Schiene 16 und der Schweißebene 10 lediglich durch die Transportketten 12. In der Schweißebene 10 ist ein Laser 20 angeordnet, dessen Laserstrahl den Schweißvorgang bewirkt. Der bis hierher beschriebene Aufbau der Laserschweißvorrichtung ist herkömmlich, und ein noch näheres Eingehen darauf erscheint für das Verständnis der im folgenden näher beschriebenen Vorrichtung nach der Erfindung unnötig.

Der wesentlichste Teil der Vorrichtung nach der Erfindung ist ein Niederhalteschuh 22 mit integrierter Niederhalterolle 24. Weiter gehören zu der Vorrichtung ein Gegenhalteschuh 26, eine Gegenhalterolle 28 und eine Stützrolle 30.

Der Niederhalteschuh 22 ist ein etwa winkelförmiges Teil, das im horizontalen Schenkel eine Einsattelung 32 aufweist, die in der Schweißebene 10 mit einer Bohrung 33 versehen ist, welche sich nach oben, d.h. zum Laser 20 hin erweitert und dazu dient, den Laserstrahl zur Schweißstelle durchzulassen. Eine Wasserzuleitung 34 führt zu einem Kanal 36 in dem Niederhalteschuh 22. Der Kanal 36 führt um die Bohrung 33 herum und endet an einer Öffnung 38 (Fig. 3), an die eine Wasserrückleitung 40 angeschlossen ist. Die Leitungen 34 und 40 sind elastische Schläuche, die die Beweglichkeit des Niederhalteschuhs 22 nicht behindern. Sie sind mit dem übrigen Kühlwasserkreislauf in der Laserschweißmaschine verbunden.

Der Niederhalteschuh 22 ist mit seinem vertikalen Schenkel 22a am Rahmen 42 der Laserschweißmaschine mittels einer Klemmschraube 44 befestigt, die mit Spiel durch ein Durchgangsloch 46 hindurchgeführt und in eine Gewindebohrung des Rahmens 42 eingeschraubt ist. Der vertikale Schenkel 22a des Niederhalteschuhs 22 ist oben mit einem Querschenkel 22b versehen, welcher eine Gewindebohrung aufweist, in die eine Stellschraube 48 eingeschraubt ist, die mittels einer Mutter 50 gekontert werden kann. Zum Einstellen der Lage des Niederhalteschuhs 22 bezüglich des Zargenvorschubweges 18 wird bei gelöster Klemmschraube 44 und gelöster Mutter 50 die Stellschraube 48 entsprechend eingestellt, woraufhin die Klemmschraube 44 und die Mutter 50 angezogen werden.

In einer parallel zur Schweißebene 10 in dem Niederhalteschuh 22 vorgesehenen Schulterbohrung 52 ist die Niederhalterolle 24 so angeordnet, daß sie unten etwas aus dem Niederhalteschuh 22 hervorsteht. Ein Niederhalterollenträger 54 ist oben mit einer Gewindespindel 56 versehen, auf der eine Schraubenfeder 58 angeordnet ist, die sich einerseits auf dem Niederhalterollenträger und andererseits an der Schulter der Schulterbohrung 52 abstützt. Auf die Gewindespindel 56 ist eine Mutter 60 geschraubt, mittels welcher sich die Federvorspannung und die Ruhestellung der Niederhalterolle 24 bezüglich des Niederhalteschuhes 22 einstellen lassen. Der Niederhalterollenträger 54 ist an seinem unteren Ende gabelförmig ausgebildet. In den Gabelschenkeln sind unten offene Schlitze 63 gebildet, in denen eine Achse 62 vertikal verschiebbar geführt ist, auf der die Niederhalterolle 24 frei drehbar gelagert ist.

Schließlich ist der Niederhalteschuh 22 mit einem Kanal 64 versehen, der in der Nähe der Schweißstelle an der Unterseite des Niederhalteschuhes mündet und zur Zufuhr von Gas, z.B. ein Edelgas oder allgemein ein Schutzgas, zur Schweißstelle dient. Auf der entgegengesetzten Seite der Schweißebene 10 befindet sich nahe der Schweißstelle eine Einlaßöffnung 66 einer Vakuumabsaugeinrichtung 68, mit welcher sich Rauch und dgl. von der Schweißstelle absaugen lassen.

Unterhalb des Zargenvorschubweges 18 und benachbart zu dem Niederhalteschuh 22 ist in der Schweißebene der Gegenhalteschuh 26 angeordnet. Er ist über ein Zwischenstück 70 mit dem Ende der Z-Schiene 16 verschraubt. Die äußere Form des Gegenhalteschuhs 26 ist ebenso wie die des Niederhalteschuhs 22 ohne weiteres aus Fig. 2 zu erkennen.

Weiter ist unterhalb des Zargenvorschubweges 18 und benachbart zu der Niederhalterolle 24 die Gegenhalterolle 28 angeordnet. Die Gegenhalterolle 28 ist auf einer Achse 72 in einer Aussparung des Zwischenstückes 70 frei drehbar gelagert.

Schließlich ist in geringem Abstand vor der Schweißebene 10 (die hier verwendeten Begriffe "vor" und "hinter" beziehen sich auf die Zargenvorschubrichtung) die Stützrolle 30 horizontal und vertikal verstellbar angeordnet. Parallel zur Z-Schiene 16 ist ein Arm 74 angeordnet, der an seinem äußeren Ende gabelförmig ausgebildet ist und zwischen seinen Gabelschenkeln auf einer Achse 76 frei drehbar angeordnet die Stützrolle 30 trägt. Zum horizontal Verstellen der Stützrolle 30 weist der Arm 74 zwei Langlöcher 78 auf, durch die hindurch zwei Klemmschrauben 80 in entsprechende Gewindebohrungen (nicht dargestellt) in den Rahmen 42 der Laserschweißmaschine eingeschraubt sind. Zusätzlich zu seiner gabelförmigen Ausbildung am äußeren Ende ist der Arm 74 in einem davor gelegenen Bereich 82 ebenfalls gabelförmig ausgebildet. Der Arm 74 besteht gänzlich oder zumindest in dem Bereich 82 aus federnd verformbarem Material (z.B. Federstahl od.dgl.). Eine in eine Gewindebohrung in dem oberen Gabelschenkel 82a eingeschraubtestellschraube 84 drückt mit ihrem unteren Ende gegen den unteren Gabelschenkel 82b, der kürzer als der Gabelschenkel 82a ist. Durch Verdrehen der Stellschraube 84 läßt sich die Stützrolle 30 vertikal verstellen. Auf der Stützrolle 30 liegen die Zargen beim Schweißvorgang mit ihrer Unterseite auf und werden beim Durchlaufen der Schweißebene durch die Stützrolle 30 abgestützt.

Der Gegenhalteschuh 26 steht maximal 0.03 mm tiefer als die Gegenhalterolle 28. Zum Einstellen der Vorrichtung nach der Erfindung werden die Niederhalterolle 24 und die Gegenhalterolle 28 sowie die Schuhe 22 und 26 auf einen Abstand a = Blechstärke + 10 % der Blechstärke eingestellt. Das Einstellen des Niederhalteschuhs 22 erfolgt dabei mittels der Stellschraube 48, und das Einstellen der Niederhalterolle 24 mittels der Mutter 60.

Der Mittelpunkt der Stützrolle 30 befindet sich in einem Abstand $\alpha$ von 1-2 mm vor der Schweißebene 10 (vgl. Fig. 3). Das Einstellen der Stützrolle 30 in der Horizontalen erfolgt mittels der Klemmschrauben 80. Die Höhe der Stützrolle 30, d.h. ihre vertikale Einstellung wird je nach Schweißergebnis mit der Stellschraube 84 eingestellt. Wenn die Stützrolle 30 weder zu hoch noch zu tief eingestellt ist, treten in der Schweißnaht am Zargenanfang keine Risse auf und das Zargenende wird richtig geschweißt.

## Ansprüche

1. Vorrichtung zum Führen von Zargen in einer Laserschweißmaschine, mit einem Rundapparat zum Herstellen der Zargen durch Einrunden von ebenen Blechzuschnitten, mit einer Z-Schiene zum Führen der beiden stumpfzuschweißenden Zargenränder bis in die Nähe der Schweißebene und mit einem Transportmittel zum Vorschub und zur zusätzlichen Führung der Zargen wenigstens bis zur Schweißebene, **gekennzeichnet durch** einen Niederhalteschuh (22), der im Bereich der Schweißebene (10) in engem Abstand über dem Zargenvorschubweg (18) angeordnet ist.

2. Vorrichtung nach Anspruch 1, gekennzeichnet durch eine erste Stelleinrichtung (48) zum Einstellen der Höhe des Niederhalteschuhs (22).

3. Vorrichtung nach Anspruch 2, dadurch gekennzeichnet, daß die Stelleinrichtung aus wenigstens einer Stellschraube (48) besteht.

4. Vorrichtung nach einem der Ansprüche 1 bis 3, gekennzeichnet durch eine an dem Niederhalteschuh (22) vor der Schweißebene (10) angebrachten Niederhalterolle (24).

5. Vorrichtung nach Anspruch 4, gekennzeichnet durch eine zweite Stelleinrichtung (54, 56, 60) zum Einstellen der Position der Niederhalterolle (24) an dem Niederhalteschuh (22).

6. Vorrichtung nach Anspruch 5. dadurch gekennzeichnet. daß die zweite Stelleinrichtung eine mit einer Gewindespindel (56) eines federbelasteten Niederhalterollenträgers (54) zusammenwirkende Mutter (60) ist.

7. Vorrichtung nach einem der Ansprüche 4 bis 6. gekennzeichnet durch einen unterhalb des Zargenvorschubweges (18) und benachbart zu dem Niederhalteschuh (22) in der Schweißebene (10) angeordneten Gegenhalteschuh (26).

8. Vorrichtung nach einem der Ansprüche 4 bis 7. gekennzeichnet durch eine unterhalb des Zargenvorschubweges (18) und benachbart zu der Niederhalterolle (24) angeordnete Gegenhalterolle (28).

9. Vorrichtung nach einem der Ansprüche 1 bis 8. gekennzeichnet durch eine in geringem Abstand vor der Schweißebene (10) angeordnete und mittels einer dritten und einer vierten Stelleinrichtung (78, 84) horizontal bzw. vertikal verstellbare Stützrolle (30).

10. Vorrichtung nach einem der Ansprüche 1 bis 9. gekennzeichnet durch eine dem Niederhalteschuh (22) zugeordnete Einrichtung (64) zur Versorgung der Schweißstelle mit Gas.

11. Vorrichtung nach einem der Ansprüche 1 bis 10. gekennzeichnet durch eine dem Niederhalteschuh (22) zugeordnete Einrichtung (66, 68) zur Entsorgung der Schweißstelle.

12. Vorrichtung nach Anspruch 11. dadurch gekennzeichnet. daß die Entsorgungseinrichtung (66, 68) eine Vakuumabsaugeinrichtung (68) mit einer Leitung ist. deren Einlaßöffnung (66) im Bereich der Schweißstelle in dem Niederhalteschuh (22) vorgesehen ist.

13. Vorrichtung nach einem der Ansprüche 1 bis 12. dadurch gekennzeichnet. daß der Niederhalteschuh (22) mit einer Kühleinrichtung (34, 36, 38, 40) versehen ist.

**Fig.1**

0 290 760

0 290 760

Fig. 2

Fig. 3